# EUROPÄISCHE PATENTSCHRIFT

(11) **EP 3 022 026 B1**
(45) Veröffentlichungstag und Bekanntmachung des Hinweises auf die Patenterteilung: **12.08.2020**
(21) Anmeldenummer: 14739796.2
(22) Anmeldetag: 11.07.2014
(51) Int. Cl.: B28B 23/00

(54) **VERFAHREN ZUM HERSTELLEN EINES FERTIGBETONTEIL-SEGMENTES EINES WINDENERGIEANLAGEN-TURMES UND EINE BETONFERTIGTEIL-TURMSEGMENT-SCHALUNG**
METHOD FOR PRODUCING A PRECAST CONCRETE SEGMENT OF A WIND TURBINE TOWER, AND A PRECAST CONCRETE TOWER SEGMENT FORMWORK
PROCÉDÉ DE FABRICATION D'UN SEGMENT D'ÉLÉMENT PRÉFABRIQUÉ EN BÉTON D'UNE TOUR D'ÉOLIENNE ET COFFRAGE D'UN SEGMENT D'ÉLÉMENT DE TOUR PRÉFABRIQUÉ EN BÉTON

(30) Priorität: 17.07.2013 DE 102013213976
(43) Veröffentlichungstag der Anmeldung: 25.05.2016
(73) Patentinhaber: Wobben Properties GmbH, 26607 Aurich (DE)
(72) Erfinder: PEIXOTO, Carlos, P-4770-260 Joane (PT)
(74) Vertreter: Eisenführ Speiser
(86) Internationale Anmeldenummer: PCT/EP2014/064965
(87) Internationale Veröffentlichungsnummer: WO 2015/007656

(56) Entgegenhaltungen:
- EP-A1- 0 050 798
- WO-A1-95/16140
- DE-A1- 1 684 221
- DE-A1-102010 005 991
- GB-A- 1 250 008
- US-A- 4 614 072
- US-A- 5 081 811
- US-A- 6 007 284
- US-A1- 2009 324 364

## Beschreibung

Die vorliegende Erfindung betrifft ein Verfahren zum Herstellen eines Fertigbetonteil-Segmentes eines Windenergieanlagen-Turms und eine Betonfertigteil-Turmsegment-Schalung.

Ein Turm einer Windenergieanlage besteht beispielsweise aus einer Mehrzahl von Betonsegmenten, soweit es sich hierbei um einen Betonturm handelt. Die jeweiligen Betonsegmente werden aufeinander gestapelt und können mittels Stahlseilen oder Stahllitzen miteinander verspannt werden.

Bei der Herstellung von Beton-Segmenten eines Windenergieanlagen-Turmes wird eine Innenverschalung und eine Außenverschalung vorgesehen. Dazwischen kann ein Metallkäfig oder eine Bewehrung zur Verbesserung der Statik des Betonsegmentes vorgesehen sein. Wenn die Innen- und Außenverschalung aufgebaut ist, dann kann Beton in das Volumen zwischen der Innen- und Außenverschalung eingeführt werden. Nachdem der Beton ausgehärtet worden ist, kann die Außenverschalung entfernt und das BetonSegment kann zur weiteren Verarbeitung weg transportiert werden.

Innerhalb des Turmes der Windenergieanlage müssen verschiedene Einbauteile wie beispielsweise eine Steigleiter oder dergleichen vorgesehen werden. Diese Einbauteile müssen natürlich sicher an bzw. innerhalb der Turmwandung (des Betonsegmentes) befestigt werden. Die Befestigung muss ferner so erfolgen, dass die Statik des Turms dadurch nicht negativ beeinflusst wird.

Die Einbauteile können eingebaut werden, indem z. B. Löcher an den entsprechenden Stellen gebohrt werden und die Einbauteile dann z. B. mittels Dübel in bzw. an der Turmwandung befestigt werden.

In der prioritätsbegründenden deutschen Anmeldung hat das Deutsche Patent- und Markenamt die folgenden Dokumente recherchiert: DE 16 84 221, US 6,315,077 B1 und US 7,108,101 B1.

DE 16 84 221 A1 offenbart eine Haltevorrichtung für eine Verankerung, die an Betonschalungen angebracht wird und dazu bestimmt ist, einen Verankerungsdübel in der gewünschten Lage zu halten, während die Betonwand gebildet wird. Es ist eine Aufgabe der vorliegenden Erfindung, ein Verfahren zum Herstellen von Fertigbetonteil-Segmenten eines Windenergieanlagen-Turms vorzusehen, welches eine kostengünstigere Herstellung der Betonsegmente ermöglicht.

Diese Aufgabe wird durch ein Verfahren nach Anspruch 1, eine Betonfertigteil-Turmsegment-Schalung nach Anspruch 3 und eine Halteeinheit nach Anspruch 4 gelöst. Somit wird ein Verfahren zum Herstellen eines Betonfertigteil-Turmsegments eines Windenergieanlagen-Turms vorgesehen. Eine Innenverschalung mit mindestens einer Bohrung und mindestens einer Halteeinheit an einer Innenseite der Innenverschalung im Bereich der Bohrung wird platziert. Ein erstes Ende eines Betonankers oder ein erstes Ende eines entfernbaren Elementes an dem ersten Ende des Betonankers wird von der Außenseite der Innenverschalung durch die Bohrung in die Halteeinheit zum Halten des Betonankers eingeführt. Eine Außenverschalung wird platziert. Beton wird zwischen der Innen- und Außenverschalung eingeführt bzw. gegossen. Das entfernbare Element in dem ersten Ende oder das erste Ende des Betonankers wird entfernt und das Betonfertigteilsegment wird entfernt.

Gemäß der vorliegenden Erfindung ist die Halteeinheit derart ausgestaltet, dass das entfernbare Element oder das erste Ende des Betonankers in eine Richtung eingeführt und in einer entgegengesetzten Richtung blockiert ist.

Gemäß der vorliegenden Erfindung weist die Halteeinheit eine Federung beim Einführen des entfernbaren Elementes und eine Verriegelung in entgegengesetzter Richtung auf.

Gemäß einem weiteren Aspekt der vorliegenden Erfindung weist das erste Ende des Betonankers ein Innengewinde auf, in welches ein entfernbares Ende einschraubbar ist und mittels welchem An- oder Einbauteile in dem Turmsegment befestigt werden können.

Die Erfindung betrifft einen Gedanken, in der Innenschalung Bohrungen an den entsprechenden Stellen vorzusehen und ferner Halteeinheiten auf der Innenseite der Innenverschalung an den Bohrungen vorzusehen, bevor die Außenverschalung aufgestellt wird (z. B. nachdem die Gitterstäbe zur Verstärkung des Betonsegmentes aufgestellt sind). Dies kann durch ein Verschweißen der Halteeinheiten an der Innenseite der Innenschalung erfolgen. Dann kann ein erstes Ende eines Betonankers durch die Bohrung in der Innenverschalung in die Halteeinheit eingeführt werden, wo der Betonanker gehalten wird. Anschließend kann die Außenverschalung platziert werden und der Beton kann in das Volumen zwischen der Innen- und Außenverschalung eingebracht werden. Nachdem der Beton ausgehärtet ist, kann die Außenverschalung aufgestellt werden. Anschließend kann das Betonsegment von der Innenschalung abgehoben werden. Die Innenschalung kann optimal verbleiben wo sie steht und die Halteeinheit kann optional noch an der Innenverschalung verbleiben oder kann entfernt werden.

An dem freien Ende des Betonankers kann ein abnehmbares Element z. B. in Form einer Schraube vorgesehen sein, welche in die Halteeinheit eingreift und durch die Halteeinheit gehalten wird. Vor Entfernung der Innenschalung kann das abnehmbare Element entfernt werden. Anschließend kann die Innenschalung zusammen mit der bzw. den Halteeinheiten entfernt werden. Somit bleibt das Betonsegment mit einer Mehrzahl von Löchern auf der Innenseite des Betonsegmentes zurück, welche jeweils über den Betonanker fest mit der Betonschalung verbunden ist.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Schnittansicht eines Betonfertigteils eines Turmsegments eines Turms einer Windenergieanlage gemäß einem ersten Ausführungsbeispiel,
- Fig. 3: zeigt eine schematische Schnittansicht eines Ausschnitts eines Betonfertigteil-Turmsegmentes gemäß einem zweiten Ausführungsbeispiel,
- Fig. 4A: zeigen zwei verschiedene schematische Ansichten einer Halteeinheit
- und 4B: gemäß dem zweiten Ausführungsbeispiel,
- Fig. 4C: zeigt eine schematische Schnittansicht der Halteeinheit von Fig. 4A und 4B, und
- Fig. 5: zeigt eine perspektivische Schnittansicht eines Ausschnitts eines Betonfertigteil-Turmsegmentes gemäß dem zweiten Ausführungsbeispiel.

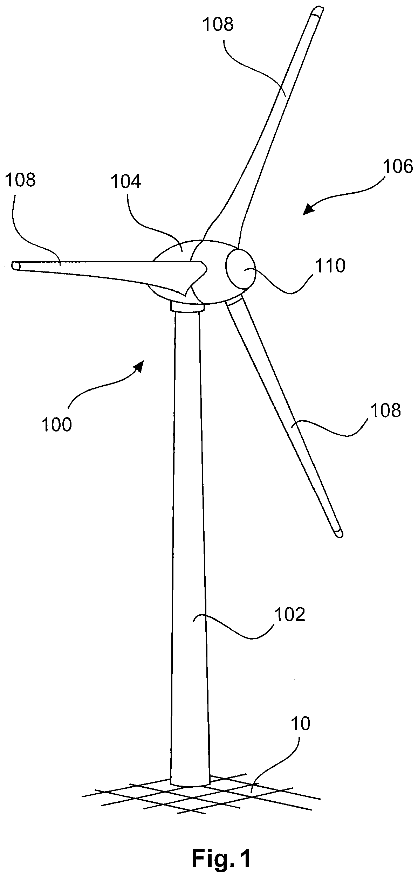

Fig. 1 zeigt eine schematische Darstellung einer Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 vorgesehen. Der Rotor 106 wird im Betrieb durch den Wind in eine Drehbewegung versetzt und dreht somit auch den Rotor oder Läufer des Generators in der Gondel 104. Der Pitchwinkel der Rotorblätter 108 kann durch Pitchmotoren an den Rotorblattwurzeln der jeweiligen Rotorblätter 108 verändert werden. Der Turm 102 kann aus einer Mehrzahl von Turmsegmenten bzw. Turmschlüssen 200 aufgebaut sein.

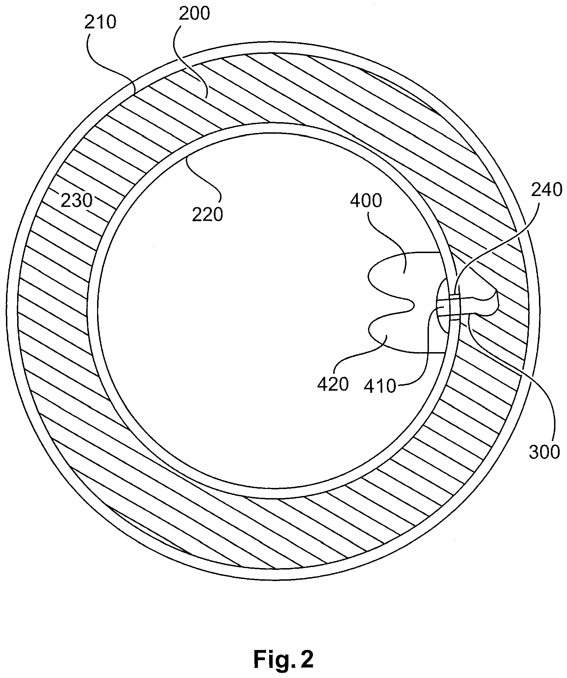

In Fig. 2 ist eine Schnittansicht eines Betonfertigteil-Turmsegments für einen Turm einer Windenergieanlage bei seiner Herstellung gemäß einem ersten Ausführungsbeispiel gezeigt. Zur Herstellung des Betonteil-Turmsegments wird eine Innenverschalung 220 mit mindestens einer Halteeinheit 400 im Bereich mindestens eines Loches 240 in der Innenverschalung 220 und auf einer Innenseite der Innenverschalung vorgesehen bzw. befestigt. Dies kann beispielsweise durch Schweißen erfolgen. Ein Betonanker 300 wird an seinem ersten Ende 310 durch das Loch 240 in der Innenverschalung von einer Außenseite geführt und in die Halteeinheit 400 gesteckt und wird dort gehalten. Nachdem eine Außenverschalung 210 vorgesehen ist, kann das Volumen zwischen der Innen- und Außenverschalung 220, 210 mit Beton 230 ausgefüllt werden. Zwischen der Innen- und Außenverschalung 220, 210 kann ein Metallkäfig bzw. eine Bewehrung vorgesehen sein, um die mechanische Stabilität des Betonfertigteils zu verbessern. Wenn der Beton zwischen der Innen- und Außenverschalung 220, 210 eingefüllt wird, dann umgibt der Beton auch den Betonanker 230. Wenn der Beton des Betonteil-Turmsegmentes eine ausreichende Härte aufweist, dann kann die Außen- und Innenverschalung 210, 220 entfernt werden. Der Betonanker 230 wird dann durch den Beton 230 sicher gehalten und an dem Betonanker 300 können Anbauteile befestigt werden.

An dem ersten Ende 310 des Betonankers 300 kann ein entfernbares Element 410 wie beispielsweise eine Schraube 410 vorgesehen sein, welche in die Halteeinheit 400 zum Halten des Betonankers 300 eingeführt werden kann. Nachdem das entfernbare Element (z. B. eine Schraube) entfernt worden ist, kann das Betonsegment entfernt werden, während die Innenschalung 220 an ihrem Ort verbleibt (ohne dass die Halteeinheiten 400 entfernt werden), so dass lediglich das Betonfertigteil 200 mit mindestens einem Betonanker 300 zurückbleibt. Das erste Ende 310 des Betonankers 300 kann beispielsweise so ausgestaltet sein, dass Einbauteile oder Anbauteile im Inneren des Turms der Windenergieanlage daran befestigt werden kann. Dies kann beispielsweise durch das Vorsehen eines (Innen-) Gewindes erfolgen.

Nach Aushärten des Betons 230 ist der Betonanker 300 ausreichend fest in dem Betonfertigteil-Turmsegment verankert, so dass Ein- und Anbauteile an dem Betonanker bzw. an seinem ersten Ende 310 befestigt werden können.

Die Halteeinheit 400 gemäß der Erfindung wird auf der Innenseite der Innenverschalung 220 im Bereich der Bohrungen bzw. Löcher 240 befestigt. Die Halteeinheit 400 ist so ausgestaltet, dass ein erstes Ende 230 eines Betonankers bzw. ein an oder in dem ersten Ende vorgesehenes abnehmbares Element 410 in die Halteeinheit 400 derart eingeführt werden kann, dass der Betonanker durch die Halteeinheit 400 befestigt ist, d. h. der Betonanker wird durch die Halteeinheit gehalten. Diese Befestigung erfolgt z. B. durch Einstecken des abnehmbaren Elementes 410 des ersten Endes 310 des Betonankers durch das Loch 240 in die Halteeinheit 400. Nachdem der Betonanker 300 durch das abnehmbare Element 410 in die Halteeinheit eingeführt ist, ist der Betonanker 300 sicher befestigt, so dass anschließend Beton 230 zwischen die Innen- und Außenverschalung eingeführt werden kann.

Durch das Vorsehen der Halteeinheit 400 an der Innenseite der Innenverschalung 220 wird lediglich eine Person zur Montage der Betonanker 230 benötigt, da hierdurch eine Montage des Betonankers 300 durch eine Person von außerhalb der Innenverschalung möglich ist. Optional kann die Halteeinheit 400 derart ausgestaltet sein, dass ein Einführen des ersten Endes 310 des Betonankers möglich ist, jedoch eine Bewegung in die entgegengesetzte Richtung blockiert wird.

Die Halteeinheit 400 verfügt über eine Federung beim Einführen des Betonankers sowie eine Verriegelung für die Entfernung des Betonankers. Die erfindungsgemäße Halteeinheit dient zum Halten des Betonankers in Position bei der Produktion des Betonfertigteil-Turmsegmentes, ohne dass die Betonanker anderweitig festgehalten werden müssen.

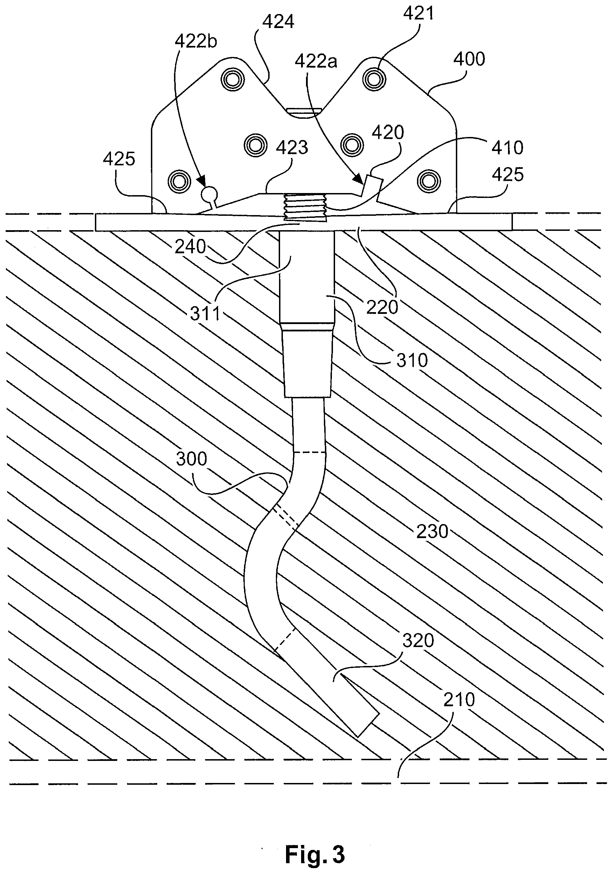

Fig. 3 zeigt eine schematische Schnittansicht eines Ausschnitts eines Betonfertigteil-Turmsegmentes gemäß einem zweiten Ausführungsbeispiel. Das Betonfertigteil-Turmsegment gemäß dem zweiten Ausführungsbeispiel kann auf dem Betonfertigteil-Turmsegment gemäß dem ersten Ausführungsbeispiel von Fig. 2 beruhen. Eine Halteeinheit 400 wird in einer Innenseite der Innenverschalung 220 z. B. durch Verschweißen befestigt. Die Halteeinheit 400 wird insbesondere in der Umgebung von Bohrungen 240 in der Innenverschalung 220 vorgesehen. Ein Betonanker 300 mit einem ersten Ende 310, der ein entfernbares Element 410 aufweist, wird durch das Loch 240 in die Halteeinheit 400 eingeführt. Die Halteeinheit 400 hält und verriegelt das entfernbare Element 410, so dass der Betonanker 300 nicht mehr entfernt werden kann.

Die Halteeinheit 400 weist zwei Platten 420 auf, welche parallel zueinander angeordnet sind und mittels Bolzen 426 aneinander befestigt bzw. miteinander befestigt werden können. Die Platten 420 weisen an ihrem ersten Ende zwei Befestigungsabschnitte 425 auf, mittels welcher die Halteeinheit 400 an einer Innenverschalung 220 befestigt werden kann. Die Befestigung kann beispielsweise mittels Schweißen erfolgen. Zwischen den beiden Befestigungsabschnitten 425, 425 ist eine Ausnehmung 423 sowie optional Montageerleichterungsabschnitte 422a, 422b vorgesehen. Die Ausnehmung 423 wird vorgesehen, damit austretender Beton durch diese Ausnehmung 423 herunterfließen kann. Die Abschnitte 422a, 422b dienen der Montageerleichterung.

An ihrem zweiten Ende weisen die Platten 420 jeweils eine Ausnehmung 424 auf. Die Ausnehmung 424 wird vorgesehen, damit das entfernbare Element 410 von einem Monteur entfernt werden kann, vorzugsweise nachdem der Beton 230 ausgehärtet ist, so dass sich der Betonanker 300 nicht mehr bewegen kann.

Der Betonanker 300 weist ein erstes Ende 310 und ein zweites Ende 320 auf. Das erste Ende 310 weist ein (Innen-)Gewinde auf und wird an der Innenschalung 220 vorgesehen. Das zweite Ende 320 ragt in den Beton 230 hinein. Mittels des Innengewindes 311 an dem ersten Ende 310 können An- oder Einbauteile im Inneren des Turmsegmentes 200 befestigt werden.

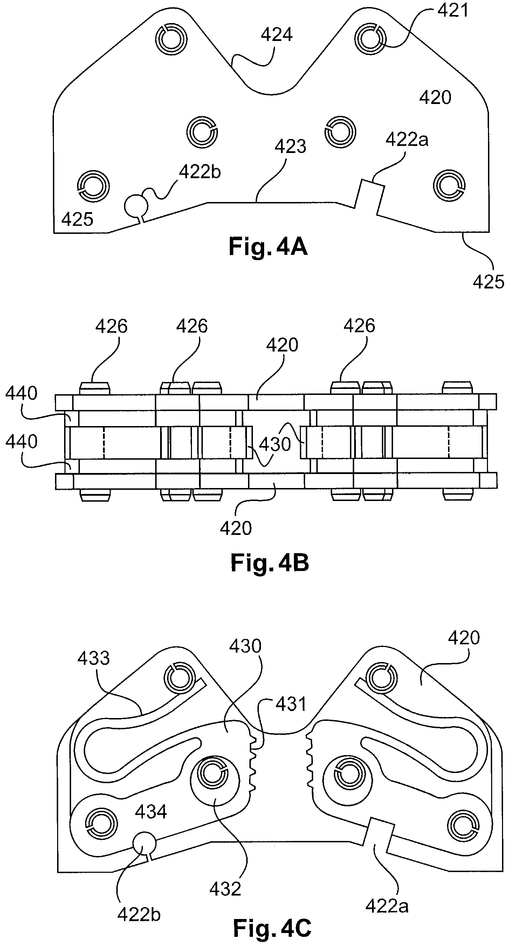

Fig. 4A zeigt eine Draufsicht auf eine Platte 420 der Halteeinheit gemäß dem zweiten Ausführungsbeispiel. Die Platte 420 weist an ihrem einen Ende die Befestigungsabschnitte 425 und dazwischen die Ausnehmung 423 sowie die Ausnehmungen 422a, 422b, welche der Montageerleichterung dienen. Am zweiten Ende der Platte 420 ist eine Ausnehmung 424 vorgesehen. Die Platte 420 weist ferner mehrere Öffnungen bzw. Bohrungen 421 für die Bolzen 426 auf.

Fig. 4B zeigt eine Draufsicht auf die Halteeinheit gemäß dem zweiten Ausführungsbeispiel. Die Halteeinheit weist zwei parallel angeordnete Halteplatten 420, Abstandsbleche 440 sowie zwei Halteelemente 430 auf. Die Halteelemente 430 weisen ein erstes federndes Ende 433, einen Rastabschnitt 431 sowie ein zweites Ende 434 auf. Das zweite Ende 432 wird mittels zwei Bolzen gehalten, während das federnde Ende 433 durch einen Bolzen gehalten wird.

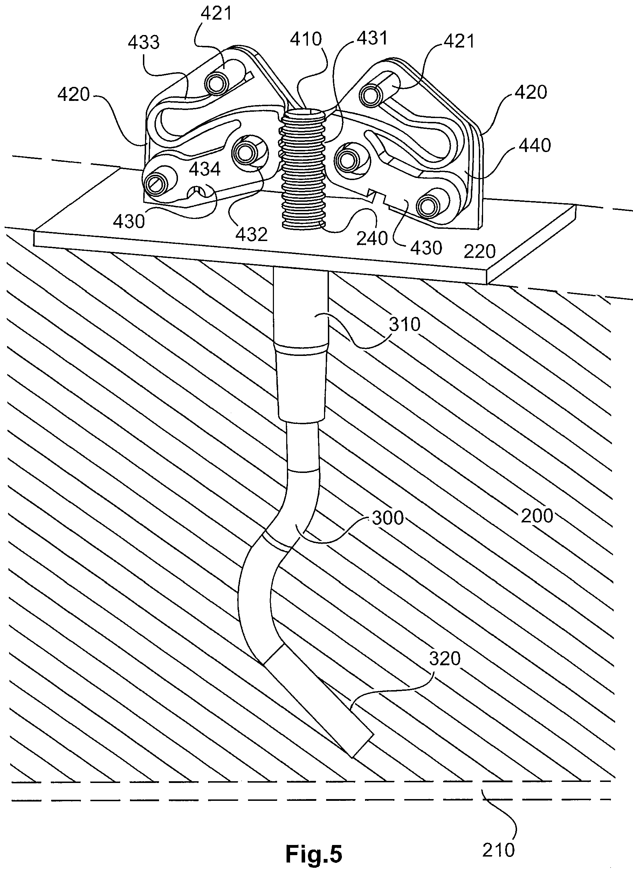

Fig. 5 zeigt eine perspektivische Schnittansicht einer Halteeinheit gemäß der Erfindung. In der Darstellung von Fig. 5 fehlt eine der Platten 420. In Fig. 5 ist der Betonanker 300 mit seinem ersten und zweiten Ende 310, 320 gezeigt, wobei ein entfernbares Element 410 in dem ersten Ende 310 befestigt ist. Das entfernbare Element 310 kann beispielsweise eine Schraube darstellen, welche in ein (Innen-)Gewinde 311 am ersten Ende 310 des Betonankers eingeschraubt ist. Bei der Montage des Betonankers 300 wird das erste Ende mit dem entfernbaren Element 410 durch die Bohrung 240 in eine an der Innenverschalung 220 befestigte Halteeinheit 400 eingeführt. Durch die zwei Rastabschnitte 431 greift die Halteeinheit 400 in ein Außengewinde des entfernbaren Elementes 410 ein und hält das entfernbare Element in der eingeführten Position. Die beiden Rastabschnitte 431 sind jeweils mit einer Feder 433 gekoppelt, so dass die Rastwirkung auch über eine Federwirkung verfügt. Durch die Ausgestaltung der Rastabschnitte 431 kann der Betonanker 300 mit dem entfernbaren Element 410 lediglich in die Halteeinheit eingeführt, nicht jedoch wieder entfernt werden.

Gemäß einem Aspekt der vorliegenden Erfindung kann die Halteeinheit 400 in Form von Spannbacken ausgestaltet sein. Die Spannbacken können dann von innen an der Innenschalung befestigt bzw. verschweißt werden. Die Position der Halteelemente 400 wird durch die Position der Löcher bzw. Bohrungen 240 in der Innenverschalung 220 festgelegt. Nachdem die Innenverschalung 220 mit den daran befestigten Halteelementen 400 aufgestellt ist, kann ein Arbeiter einen Betonanker 310 mit einem entfernbaren Element z. B. in Form einer Innen-Sechskantschraube von außerhalb der Innenverschalung durch die Bohrung 240 in die Spannbacke 400 einführen. Optional kann der Betonanker anschließend um z. B. 40° gedreht werden, so dass ein Außengewinde der Schraube in Nasen an dem Rastabschnitt 431 eingreifen und der Betonanker somit in die Innenschalung zur Befestigung gezogen wird. Nachdem das Volumen zwischen Innen- und Außenverschalung mit Beton 230 ausgefüllt worden ist, kann die Sechskant-Innenschraube 410 aus der Halteeinheit bzw. aus der Spannbacke herausgedreht werden und die Innenverschalung 220 kann entfernt werden.

Gemäß der Erfindung kann optional bei der Herstellung des Betonfertigteil-Turmsegmentes eines Windenergieanlage-Turms ein Bewehrungskorb mittels eines Krans auf einen Innenkern mit einer Innenschalung gesetzt werden bzw. platziert werden. Anschließend können Betonanker (z. B. ein Wellenanker oder ein Hülsendübel) mit einem eingeschraubten Gewindebolzen in die erfindungsgemäße Halteeinheiten eingeführt oder eingedrückt werden, die an der Innenseite der Innenschalung befestigt sind. Gemäß der Erfindung können die Betonanker beispielweise zum Befestigen einer Turmleiter, eines Kabelhalters etc. verwendet werden. Anschließend kann (auch nachdem der Korb auf dem Innenkern platziert worden ist) die Außenschalung gesetzt werden und alle Betonanker zugestellt und verschraubt werden. Anschließend kann Beton in die Schalung eingeführt werden. Nach einem Aushärten des Betons können die Gewindestifte bzw. die entfernbaren Elemente aus den erfindungsgemäßen Halteeinheiten geschraubt werden, sodass keine Verbindung mehr zwischen dem Betonsegment und der Innenschalung vorhanden ist. Anschließend kann die Außenschalung gelöst und aufgestellt werden, sodass das Betonsegment von außen frei zugänglich ist. Danach kann das fertige Betonsegment beispielsweise mittels eines Krans von der Innenverschalung gehoben werden und kann zur weiteren Verarbeitung weitertransportiert werden.

## Patentansprüche

1. Verfahren zum Herstellen eines Betonfertigteil-Turmsegments eines Windenergieanlagen-Turms, mit den Schritten:
Platzieren einer Innenverschalung (220) mit mindestens einer Bohrung (240) und mindestens einer Halteeinheit (400) an einer Innenseite der Innenverschalung (220) im Bereich der Bohrung (240),
Einführen eines entfernbaren Elementes (410) an dem ersten Ende (310) des Betonankers von der Außenseite der Innenverschalung (220) durch die Bohrung (240) in die Halteeinheit (400) zum Halten des Betonankers (300),
Platzieren einer Außenverschalung (210),
Gießen von Beton zwischen der Innen- und Außenverschalung (220, 210),
Entfernen des entfernbaren Elementes (410) in dem ersten Ende (310) des Betonankers (300) und
Entfernen der Innen- und Außenverschalung (220, 210),
wobei die Halteeinheit (400) derart ausgestaltet ist, dass das entfernbare Element (410) in eine Richtung eingeführt und in der entgegengesetzten Richtung blockiert ist,
wobei die Halteeinheit (400) eine Federung bei Einführen des entfernbaren Elementes (410) und eine Verriegelung in entgegengesetzter Richtung aufweist,
wobei die Halteeinheit (400) zwei parallel angeordnete Halteplatten (420), welche mittels Bolzen (426) aneinander befestigt sind, Abstandsbleche (440) sowie zwei Halteelemente (430) aufweist, wobei die Halteelemente (430) ein erstes federndes Ende (433), einen Rastabschnitt (431) sowie ein zweites Ende (434) aufweisen, wobei das zweite Ende (432) mittels zwei Bolzen (426) gehalten wird, während das federnde Ende (433) durch einen Bolzen (426) gehalten wird,
wobei die Halteplatten (420) an ihrem ersten Ende jeweils zwei Befestigungsabschnitte (425) aufweisen,
wobei zwischen den zwei Befestigungsabschnitten (425) eine Ausnehmung (423) vorgesehen ist,
wobei die Halteplatten (420) an ihrem zweiten Ende jeweils eine Ausnehmung (424) aufweisen.

2. Verfahren nach Anspruch 1, wobei
das erste Ende (310) des Betonankers (300) ein Innengewinde (311) aufweist, in welches das entfernbare Element (410) eingeschraubt ist und mittels welchem An- oder Einbauteile in dem Turmsegment befestigt werden können.

3. Betonfertigteil-Turmsegment-Schalung zum Herstellen eines Windenergieanlagen-Turms, mit
einer Innenschalung (220) mit mindestens einer Bohrung (240), und
mindestens einer Halteeinheit (400) an der Innenschalung (220) im Bereich der Bohrung (240),
wobei die Halteeinheit (400) dazu ausgestaltet ist, einen Betonanker (300) zu halten, wenn ein entfernbares Element (410) an dem ersten Ende (310) des Betonankers von einer Außenseite der Innenschalung (220) durch die Bohrung (240) in die Halteeinheit (400) eingeführt wird
wobei
die Halteeinheit (400) derart ausgestaltet ist, dass das entfernbare Element (410) in eine Richtung eingeführt und in der entgegengesetzten Richtung blockiert ist
wobei
die Halteeinheit (400) eine Federung zum Einführen des entfernbaren Elementes (410) und eine Verriegelung in entgegengesetzter Richtung aufweist,
wobei die Halteeinheit (400) zwei parallel angeordnete Halteplatten (420), welche mittels Bolzen (426) aneinander befestigt sind, Abstandsbleche (440) sowie zwei Halteelemente (430) aufweist, wobei die Halteelemente (430) ein erstes federndes Ende (433), einen Rastabschnitt (431) sowie ein zweites Ende (434) aufweisen, wobei das zweite Ende (432) mittels zwei Bolzen (426) gehalten wird, während das federnde Ende (433) durch einen Bolzen (426) gehalten wird,
wobei die Halteplatten (420) an ihrem ersten Ende jeweils zwei Befestigungsabschnitte (425) aufweisen,
wobei zwischen den zwei Befestigungsabschnitten (425) eine Ausnehmung (423) vorgesehen ist,
wobei die Halteplatten (420) an ihrem zweiten Ende jeweils eine Ausnehmung (424) aufweisen.

4. Halteeinheit (400) zum Halten eines Betonankers (300) mit einem ersten Ende (310), das ein entfernbares Element (410) aufweist, bei der Herstellung eines Betonfertigteil-Turmsegments eines Windenergieanlagen-Turms, mit
mindestens einem federnden Halteelement (430), das eine Einführung eines Betonankers (300) in eine erste Richtung erlaubt und ein Entfernen des Betonankers (300) in eine zweite Richtung verhindert,
wobei die zweite Richtung entgegengesetzt ist zur ersten Richtung, und
eine Federung zum Einführen des entfernbaren Elementes (410) und eine Verriegelung in entgegengesetzter Richtung aufweist, **dadurch gekennzeichnet, dass** die Halteeinheit (400) zwei parallel angeordnete Halteplatten (420), welche mittels Bolzen (426) aneinander befestigt sind, Abstandsbleche (440) sowie zwei Halteelemente (430) aufweist, wobei die Halteelemente (430) ein erstes federndes Ende (433), einen Rastabschnitt (431) sowie ein zweites Ende (434) aufweisen, wobei das zweite Ende (432) mittels zwei Bolzen (426) gehalten wird, während das federnde Ende (433) durch einen Bolzen (426) gehalten wird,
wobei die Halteplatten (420) an ihrem ersten Ende jeweils zwei Befestigungsabschnitte (425) zum Befestigen der Halteeinheit (400) an einer Innenverschalung (220) aufweisen,
wobei zwischen den zwei Befestigungsabschnitten (425) eine Ausnehmung (423) vorgesehen ist,
wobei die Halteplatten (420) an ihrem zweiten Ende jeweils eine Ausnehmung (424) aufweisen.

## Claims

1. Method for producing a precast concrete tower segment of a wind turbine tower, comprising the following steps:
placing an inner formwork (220) having at least one bore (240) and at least one holding unit (400) on an inner side of the inner formwork (220) in the region of the bore (240),
introducing a removable element (410) at the first end (310) of the concrete anchor from the outer side of the inner formwork (220) through the bore (240) into the holding unit (400) in order to hold the concrete anchor (300),
placing an outer formwork (210),
pouring concrete between the inner and outer formwork (220, 210),
removing the removable element (410) in the first end (310) of the concrete anchor (300), and
removing the inner and outer formwork (220, 210), wherein
the holding unit (400) is designed in such a way that the removable element (410) is introduced in one direction and blocked in the opposite direction, wherein
the holding unit (400) has a spring action when introducing the removable element (410) and a locking action in the opposite direction, wherein the holding unit (400) has two holding plates (420) which are arranged parallel to each other and which are fastened to each other by means of bolts (426), spacer plates (440) and two holding elements (430), wherein the holding elements (430) have a first resilient end (433), a locking portion (431) and a second end (434), wherein the second end (432) is held by means of two bolts (426) while the resilient end (433) is held by one bolt (426),
wherein the holding plates (420) each comprise two fastening portions (425) at their first ends,
wherein a cut out (423) is present between the two fastening portions (425),
wherein the holding plates (420) each comprise a cut out (424) at their second end.

2. Method according to Claim 1, wherein
the first end (310) of the concrete anchor (300) has an internal thread (311) into which the removable element (410) is screwed and by means of which attachment or installation parts can be fastened in the tower segment.

3. Precast concrete tower segment formwork for producing a wind turbine tower, comprising
an inner formwork (220) having at least one bore (240), and
at least one holding unit (400) on the inner formwork (220) in the region of the bore (240),
wherein the holding unit (400) is designed to hold a concrete anchor (300) when a removable element (410) is introduced at the first end (310) of the concrete anchor from an outer side of the inner formwork (220) through the bore (240) into the holding unit (400), wherein
the holding unit (400) is designed in such a way that the removable element (410) is introduced in one direction and blocked in the opposite direction, wherein
the holding unit (400) has a spring for introducing the removable element (410) and a locking action in the opposite direction, wherein the holding unit (400) has two holding plates (420) which are arranged parallel to each other and which are fastened to each other by means of bolts (426), spacer plates (440) and two holding elements (430), wherein the holding elements (430) have a first resilient end (433), a locking portion (431) and a second end (434), wherein the second end (432) is held by means of two bolts while the resilient end (433) is held by one bolt (426),
wherein the holding plates (420) each comprise two fastening portions (425) at their first end,
wherein a cut out (423) is present between the two fastening portions (425),
wherein the holding plates (420) each comprise a cut out (424) at their second end.

4. Holding unit (400) for holding a concrete anchor (300) with a first end (310), which comprises a removable element (410), during the production of a precast concrete tower segment of a wind turbine tower, comprising
at least one resilient holding element (430) which allows a concrete anchor (300) to be introduced in a first direction and prevents the concrete anchor (300) from being removed in a second direction,
wherein the second direction is opposite to the first direction, and
a spring for introducing the removable element (410) and locking action in the opposite direction,
**characterized in that**
the holding unit (400) comprises two holding plates (420) which are arranged in parallel to each other, spacer plates (440) and two holding elements (430), wherein the holding elements (430) comprise a first resilient end (433), a locking portion (431) and two second ends (434),
wherein the second end (432) is held by means of at least two bolts (426) while the resilient end (433) is held by one bolt (426)
wherein the holding plates (420) comprise two fastening portions (425) at their first end each for fastening the holding unit (400) at an inner formwork (220),
wherein a cut out (423) is present between the two fastening portions (425),
wherein the holding plates (420) each comprise a cut out (424) at their second end.

## Revendications

1. Procédé de fabrication d'un segment de tour d'élément préfabriqué en béton d'une tour d'éolienne, avec les étapes :
de placement d'un coffrage intérieur (220) avec au moins un perçage (240) et au moins une unité de retenue (400) au niveau d'un côté intérieur du coffrage intérieur (220) dans la zone du perçage (240),
d'introduction d'un élément retirable (410) au niveau de la première extrémité (310) de l'armature en béton du côté extérieur du coffrage intérieur (220) par le perçage (240) dans l'unité de retenue (400) pour la retenue de l'armature en béton (300),
de placement d'un coffrage extérieur (210),
de coulage de béton entre le coffrage intérieur et extérieur (220, 210),
de retrait de l'élément retirable (410) dans la première extrémité (310) de l'armature en béton (300) et
de retrait du coffrage intérieur et extérieur (220, 210),
dans lequel l'unité de retenue (400) est configurée de telle manière que l'élément retirable (410) soit introduit dans une direction et soit bloqué dans la direction inverse,
dans lequel l'unité de retenue (400) présente une suspension lors de l'introduction de l'élément retirable (410) et un verrouillage dans la direction inverse,
dans lequel l'unité de retenue (400) présente deux plaques de retenue (420) agencées parallèlement qui sont fixées au moyen de boulons (426) l'une à l'autre, des tôles d'écartement (440) ainsi que deux éléments de retenue (430), dans lequel les éléments de retenue (430) présentent une première extrémité élastique (433), une section d'encliquetage (431) ainsi qu'une seconde extrémité (434), dans lequel la seconde extrémité (432) est retenue au moyen de deux boulons (426) alors que l'extrémité élastique (433) est maintenue par un boulon (426),
dans lequel les plaques de retenue (420) présentent à leur première extrémité respectivement deux sections de fixation (425),
dans lequel un évidement (423) est prévu entre les deux sections de fixation (425),
dans lequel les plaques de retenue (420) présentent à leur seconde extrémité respectivement un évidement (424).

2. Procédé selon la revendication 1, dans lequel la première extrémité (310) de l'armature en béton (300) présente un filet intérieur (311), dans lequel l'élément retirable (410) est vissé et au moyen duquel des pièces rapportées ou prémontées peuvent être fixées dans le segment de tour.

3. Coffrage d'un segment de tour d'élément préfabriqué pour la fabrication d'une tour d'éolienne, avec
un coffrage intérieur (220) avec au moins un perçage (240), et
au moins une unité de retenue (400) au niveau du coffrage intérieur (220) dans la zone du perçage (240),
dans lequel l'unité de retenue (400) est configurée afin de retenir une armature en béton (300) lorsqu'un élément retirable (410) est introduit au niveau de la première extrémité (310) de l'armature en béton d'un côté extérieur du coffrage intérieur (220) par le perçage (240) dans l'unité de retenue (400),
dans lequel
l'unité de retenue (400) est configurée de telle manière que l'élément retirable (410) soit introduit dans une direction et soit bloqué dans la direction inverse,
dans lequel
l'unité de retenue (400) présente une suspension pour l'introduction de l'élément retirable (410) et un verrouillage dans la direction inverse,
dans lequel l'unité de retenue (400) présente deux plaques de retenue (420) agencées parallèlement qui sont fixées au moyen de boulons (426) l'une à l'autre, des tôles d'écartement (440) ainsi que deux plaques de retenue (430), dans lequel les éléments de retenue (430) présentent une première extrémité élastique (433), une section d'encliquetage (431) ainsi qu'une seconde extrémité (434), dans lequel la seconde extrémité (432) est retenue au moyen de deux boulons (426) alors que l'extrémité élastique (433) est retenue par un boulon (426),
dans lequel les plaques de retenue (420) présentent à leur première extrémité respectivement deux sections de fixation (425),
dans lequel un évidement (423) est prévu entre les deux sections de fixation (425),
dans lequel les plaques de retenue (420) présentent à leur seconde extrémité respectivement un évidement (424).

4. Unité de retenue (400) pour la retenue d'une armature en béton (300) avec une première extrémité (310) qui présente un élément retirable (410), lors de la fabrication d'un segment de tour d'élément préfabriqué d'une tour d'éolienne, avec
au moins un élément de retenue élastique (430) qui permet une introduction d'une armature en béton (300) dans une première direction et empêche un retrait de l'armature en béton (300) dans une seconde direction,
dans lequel la seconde direction est opposée à la première direction, et
présente une suspension pour l'introduction de l'élément retirable (410) et un verrouillage dans la direction inverse,
**caractérisé en ce que**
l'unité de retenue (400) présente deux plaques de retenue (420) agencées parallèlement qui sont fixées au moyen de boulons (426) l'une à l'autre, des tôles d'écartement (440) ainsi que deux éléments de retenue (430), dans lequel les éléments de retenue (430) présentent une première extrémité élastique (433), une section d'encliquetage (431) ainsi qu'une seconde extrémité (434), dans lequel la seconde extrémité (432) est retenue au moyen de deux boulons (426) alors que l'extrémité élastique (433) est maintenue par un boulon (426),
dans lequel les plaques de retenue (420) présentent à leur première extrémité respectivement deux sections de fixation (425) pour la fixation de l'unité de retenue (400) à un coffrage intérieur (220),
dans lequel un évidement (423) est prévu entre les deux sections de fixation (425),
dans lequel les plaques de retenue (420) présentent à leur seconde extrémité respectivement un évidement (424).
